(19) Europäisches Patentamt / European Patent Office / Office européen des brevets

(11) **EP 3 896 586 A1**

(12) **EUROPEAN PATENT APPLICATION**
published in accordance with Art. 153(4) EPC

(43) Date of publication:
**20.10.2021 Bulletin 2021/42**

(51) Int Cl.:
**G06F 17/14** *(2006.01)*

(21) Application number: **19911621.1**

(22) Date of filing: **24.01.2019**

(86) International application number:
**PCT/JP2019/002271**

(87) International publication number:
**WO 2020/152826 (30.07.2020 Gazette 2020/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **TAKAHASHI, Katsumi**
**Tokyo 100-8310 (JP)**
• **SHIRAISHI, Masashi**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **FOURIER TRANSFORM DEVICE AND FOURIER TRANSFORM METHOD**

(57) Among K × M pieces of data ("K" is an integer greater than or equal to 3, and "M" is an integer greater than or equal to 2), ((k - 1)M + 1)th data (k = 1,..., K) in order starting from the first data is head data in each of the K data strings ($1_k$), and the K data strings ($1_k$) each contain M pieces of data each at every M pieces of data in order starting from each head data among the K × M pieces of data. The Fourier transform device includes: an adder (2) for calculating each sum of K pieces of data that are m-th data (m = 1,..., M) in the order starting from each of the head data in the respective M pieces of data contained in the K data strings ($1_k$); and a transformer (3) for performing an M-point Fourier transform on the sums calculated by the adder (2) or an M-point inverse Fourier transform on the sums.

FIG. 1

**Description**

TECHNICAL FIELD

The present invention relates to a Fourier transform device and a Fourier transform method for performing a Fourier transform or an inverse Fourier transform.

BACKGROUND ART

The following Patent Literature 1 discloses a Fourier transform circuit for performing Fourier transform on a data string having 2N points, using a fast Fourier transform (FFT) circuit having a lower number of points than an FFT circuit having 2N points.

The Fourier transform circuit disclosed in Patent Literature 1 includes an even and odd number dividing circuit for separating a data string having 2N points into a first data string having N points as an even-numbered point data string and a second data string having N points as an odd-numbered point data string.

The Fourier transform circuit disclosed in Patent Literature 1 also includes an FFT circuit having N points.

The Fourier transform circuit disclosed in Patent Literature 1 sequentially performs a Fourier transform of the first data string and a Fourier transform of the second data string using the FFT circuit having N points.

CITATION LIST

PATENT LITERATURE

Patent Literature 1: JP 2003-115813 A

SUMMARY OF INVENTION

TECHNICAL PROBLEM

The Fourier transform circuit disclosed in Patent Literature 1 can reduce the circuit scale by about half as compared with a case of using an FFT circuit having N points. However, the Fourier transform circuit disclosed in Patent Literature 1 has a disadvantage that the circuit scale can be reduced to only about half even in a case where a subsequent circuit requires only a part of the Fourier transform result.

The present invention has been made to solve the above-mentioned disadvantage, and an object of the invention is to obtain a Fourier transform device and a Fourier transform method in which the circuit scale can be reduced to even less than about half of the circuit scale of an FFT circuit that performs a $K \times M$-point Fourier transform ("K" is an integer greater than or equal to 3, and "M" is an integer greater than or equal to 2, alternatively, "K" is an integer greater than or equal to 2, and "M" is an integer greater than or equal to 3) in a case where a subsequent circuit requires only a part of a Fourier transform result or a part of an inverse Fourier transform result.

SOLUTION TO PROBLEM

A Fourier transform device according to the present invention in which, among $K \times M$ pieces of data ("K" is an integer greater than or equal to 3, and "M" is an integer greater than or equal to 2), $((k - 1)M + 1)$th data $(k = 1,..., K)$ in order starting from first data is head data in each of K data strings, and the K data strings each contain M pieces of data each at every M pieces of data in order starting from each head data among the $K \times M$ pieces of data, the Fourier transform device includes: an adder for calculating each sum of K pieces of data that are m-th data $(m = 1,..., M)$ in the order starting from each of the head data in the respective M pieces of data contained in the K data strings; and a transformer for performing an M-point Fourier transform on the sums calculated by the adder or an M-point inverse Fourier transform on the sums.

ADVANTAGEOUS EFFECTS OF INVENTION

According to the present invention, in a case where a subsequent circuit requires only a part of a Fourier transform result or a part of an inverse Fourier transform result, the circuit scale can be reduced to even less than about half of the circuit scale of an FFT circuit that performs a $K \times M$-point Fourier transform.

BRIEF DESCRIPTION OF DRAWINGS

FIG. 1 is a configuration diagram illustrating a Fourier transform device according to a first embodiment.

FIG. 2 is a hardware configuration diagram illustrating the hardware of the Fourier transform device according to the first embodiment.

FIG. 3 is a hardware configuration diagram of a computer in a case where the Fourier transform device is implemented by, for example, software or firmware.

FIG. 4 is a flowchart illustrating a Fourier transform method which is a process procedure performed in the Fourier transform device illustrated in FIG. 1.

FIG. 5 is a configuration diagram illustrating a Fourier transform device according to a second embodiment.

FIG. 6 is a hardware configuration diagram illustrating the hardware of the Fourier transform device according to the second embodiment.

FIG. 7 is a configuration diagram illustrating a Fourier transform device according to a third embodiment.

FIG. 8 is a hardware configuration diagram illustrating the hardware of the Fourier transform device according to the third embodiment.

FIG. 9 is a configuration diagram illustrating a Fourier transform device according to a fourth embodiment.

FIG. 10 is a hardware configuration diagram illustrating the hardware of the Fourier transform device according to the fourth embodiment.

FIG. 11 is a configuration diagram illustrating another Fourier transform device according to the fourth embodiment.

FIG. 12 is a configuration diagram illustrating another Fourier transform device according to the fourth embodiment.

FIG. 13 is a configuration diagram illustrating a Fourier transform device according to a fifth embodiment.

FIG. 14 is a hardware configuration diagram illustrating the hardware of the Fourier transform device according to the fifth embodiment.

DESCRIPTION OF EMBODIMENTS

In order to describe the present invention further in detail, embodiments for carrying out the invention will be described below by referring to the accompanying drawings.

First Embodiment

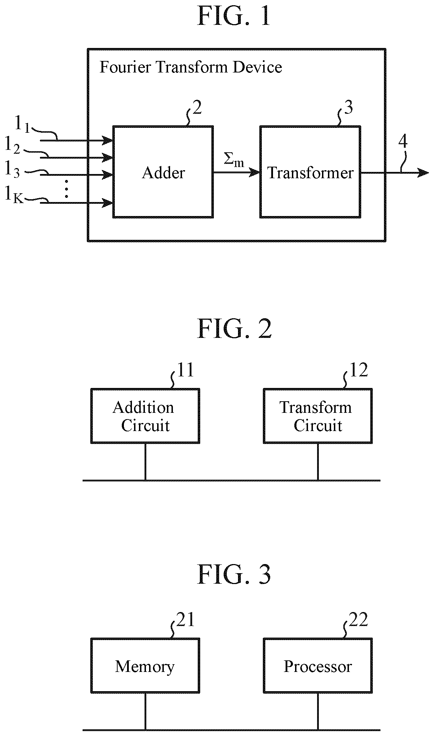

FIG. 1 is a configuration diagram illustrating a Fourier transform device according to a first embodiment.

FIG. 2 is a hardware configuration diagram illustrating the hardware of the Fourier transform device according to the first embodiment.

In FIGS. 1 and 2, K data strings $1_k$ (k = 1,..., K) are input to the Fourier transform device. Here, "K" is an integer greater than or equal to 3.

The K data strings $1_k$ each contain, as head data, ((k - 1)M + 1)th data among K $\times$ M pieces of data arranged in order starting from first data.

The K data strings $1_k$ each contain, in addition to the respective head data, (M - 1) pieces of data each at every M pieces of data in order starting from each head data among the K $\times$ M pieces of data.

Here, "M" is an integer greater than or equal to 2. The K $\times$ M pieces of data may be real number data or complex number data.

A specific example of the K data strings $1_k$ is as follows.

A data string $1_1$ contains data $D_1$, data $D_{2,...,}$ and Data $D_M$ and is input to an adder 2 in the order of data $D_1$, data $D_{2,...,}$ and Data $D_M$.

$$\text{Data string } 1_1 = \{D_1, D_2,..., D_M\}$$

A data string $1_2$ contains data $D_{M+1}$, data $D_{M+2,...,}$ and Data $D_{2M}$ and is input to the adder 2 in the order of data $D_{M+1}$, data $D_{M+2,...,}$ and Data $D_{2M}$.

$$\text{Data string } 1_2 = \{D_{M+1}, D_{M+2},..., D_{2M}\}$$

A data string $1_3$ contains data $D_{2M+1}$, data $D_{2M+2,...,}$ and Data $D_{3M}$ and is input to the adder 2 in the order of data $D_{2M+1}$, data $D_{2M+2,...,}$ and data $D_{3M}$.

$$\text{Data string } 1_3 = \{D_{2M+1}, D_{2M+2,...}, D_{3M}\}$$

A data string $1_K$ contains data $D_{(K-1)M+1}$, data $D_{(K-1)M+2,...,}$ and Data $D_{K \times M}$ and is input to the adder 2 in the order of data $D_{(K-1)M+1.}$, Data $D_{(K-1)M+2,...,}$ and Data $D_{K \times M}$.

$$\text{Data string } 1_K = \{D_{(K-1)M+1}, D_{(K-1)M+2,...}, D_{K \times M}\}$$

The adder 2 is implemented by, for example, an addition circuit 11 illustrated in FIG. 2.

The adder 2 receives input of K pieces of data, each of which is m-th data (m = 1,..., M) in the order each starting from head data in M pieces of data contained in each of the K data strings $1_k$.

The adder 2 calculates the sum of the K pieces of data each time input of K pieces of data is received and outputs the calculated sum of K pieces of data to the transformer 3.

The transformer 3 is implemented by, for example, a transform circuit 12 illustrated in FIG. 2.

The transformer 3 performs an M-point Fourier transform on each of the sums calculated by the adder 2 or an M-point inverse Fourier transform on each of the sums.

The transformer 3 outputs the result of the M-point Fourier transform or the result of the M-point inverse Fourier transform to the outside as a transform result 4.

The Fourier transform performed by the transformer 3 is not limited to the fast Fourier transform but also includes, for example, the discrete Fourier transform.

Likewise, the inverse Fourier transform performed by the transformer 3 is not limited to the inverse fast Fourier transform but also includes, for example, the inverse discrete Fourier transform.

In FIG. 1, it is assumed that each of the adder 2 and the transformer 3, which are components of the Fourier transform device, is implemented by dedicated hardware as illustrated in FIG. 2. That is, it is assumed that the Fourier transform device is implemented by the addition circuit 11 and the transform circuit 12.

Here, each of the addition circuit 11 and the transform circuit 12 corresponds to, for example, a single circuit, a composite circuit, a programmed processor, a parallel programmed processor, an application specific integrated circuit (ASIC), a field-programmable gate array (FPGA), or a combination thereof.

The components of the Fourier transform device are not limited to those implemented by dedicated hardware, and the Fourier transform device may be implemented by software, firmware, or a combination of software and firmware.

The software or the firmware is stored in a memory of a computer as a program. Here, the computer refers to hardware for executing the program and corresponds to, for example, a central processing unit (CPU), a central processing device, a processing device, an arithmetic device, a microprocessor, a microcomputer, a processor, or a digital signal processor (DSP).

FIG. 3 is a hardware configuration diagram of a computer in a case where the Fourier transform device is implemented by software, firmware, or the like.

In a case where the Fourier transform device is implemented by software, firmware, or the like, programs for causing a computer to execute the processing procedures performed in the adder 2 and the transformer 3 are stored in a memory 21. Then, a processor 22 of the computer executes the programs stored in the memory 21.

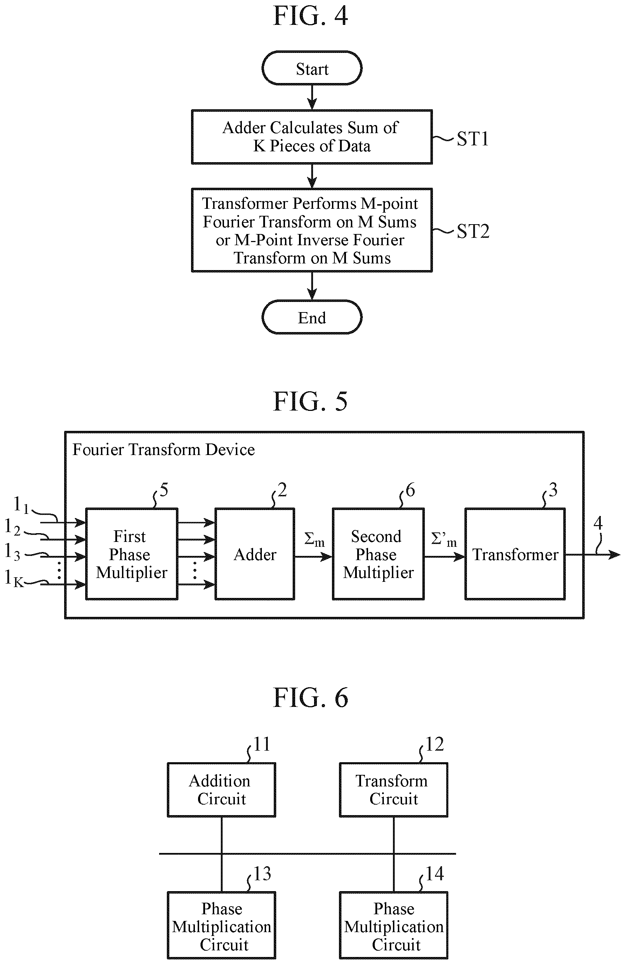

FIG. 4 is a flowchart illustrating a Fourier transform method which is a process procedure performed in the Fourier transform device illustrated in FIG. 1.

Illustrated in FIG. 2 is an example in which each of the components of the Fourier transform device is implemented by dedicated hardware, whereas illustrated in FIG. 3 is an example in which the Fourier transform device is implemented by software, firmware, or the like. However, this is merely an example, and some components in the Fourier transform device may be implemented by dedicated hardware, and the remaining components may be implemented by software, firmware, or the like.

Next, the operation of the Fourier transform device illustrated in FIG. 1 will be described.

The K data strings $1_K$ (k = 1,..., K) are arranged in parallel.

For example, at the timing when data $D_1$ contained in data string $1_1$ is input to the adder 2, data $D_{M+1}$ contained in data string $1_2$, data $D_{2M+1}$ contained in data string $1_3$, and data $D_{(K-1)M+1}$ contained in data string $1_K$ are input to the adder 2.

Likewise, for example, at the timing when data $D_M$ contained in data string $1_1$ is input to the adder 2, data $D_{2M}$ contained in data string $1_2$, data $D_{3M}$ contained in data string $1_3$, and data $D_{K \times M}$ contained in data string $1_K$ are input to the adder 2.

The adder 2 receives input of K pieces of data, each of which is m-th data (m = 1,..., M) in the order each starting from head data in M pieces of data contained in each of the K data strings $1_k$.

The adder 2 calculates the sum $\Sigma_m$, (m = 1,..., M) of K pieces of data which have been input thereto, each time the input of the K pieces of data is received (step ST1 in FIG. 4).

Since m = 1,..., M, the adder 2 calculates the sum $\Sigma_m$ of K pieces of data M times and outputs the M sums $\Sigma_m$ to the transformer 3.

The specific calculation of summing up K pieces of data by the adder 2 is as follows.

For example, if m = 1, the adder 2 accepts input of data $D_1$, data $D_{M+1}$, data $D_{2M+1,...,}$ and data $D_{(K-1)M+1}$.

The adder 2 calculates the sum $\Sigma_1$ of data $D_1$, data $D_{M+1}$, data $D_{2M+1,...,}$ and data $D_{(K-1)M+1}$ as expressed in the following Equation 1.

$$\Sigma_1 = D_1 + D_{M+1} + D_{2M+1} + \ldots + D_{(K-1)M+1} \quad (1)$$

For example, if m = 2, the adder 2 accepts input of data $D_2$, data $D_{M+2}$, data $D_{2M+2,...,}$ and data $D_{(K-1)M+2}$.

The adder 2 calculates the sum $\Sigma_2$ of data $D_2$, data $D_{M+2}$, data $D_{2M+2,...,}$ and data $D_{(K-1)M+2}$ as expressed in the following Equation 2.

$$\Sigma_2 = D_2 + D_{M+2} + D_{2M+2} + \ldots + D_{(K-1)M+2} \quad (2)$$

For example, if m = M, the adder 2 accepts input of data $D_M$, data $D_{2M}$, data $D_{3M},...,$ and data $D_{K \times M}$.

The adder 2 calculates the sum $\Sigma_M$ of data $D_M$, data $D_{2M}$, data $D_{3M,...,}$ and data $D_{K \times M}$ as expressed in the following Equation 3.

$$\Sigma_M = D_M + D_{2M} + D_{3M} + \ldots + \Sigma_{K \times M} \quad (3)$$

When the transformer 3 receives M sums $\Sigma_m$ from the adder 2, the transformer 3 performs an M-point Fourier transform on the M sums $\Sigma_m$ or an M-point inverse Fourier transform on the M sums $\Sigma_m$ (step ST2 in FIG. 4).

The transformer 3 outputs, as the transform result 4, M-point Fourier transform result $\{R_1, R_{M+1}, R_{2M+1,...,} R_{(K-1)M+1}\}$ or M-point inverse Fourier transform result $\{R'_1, R'_{M+1}, R'_{2M+1,...,} R'_{(K-1)M+1}\}$ to the outside.

For example, where K = M = 4 and K × M (= 16) pieces of data are $\{D_1, D_{2,...,} D_{16}\}$, then data string $1_k$ (k = 1,..., 4) is as follows.

$$1_1 = \{D_1, D_2, D_3, D_4\}$$

$$1_2 = \{D_5, D_6, D_7, D_8\}$$

$$1_3 = \{D_9, D_{10}, D_{11}, D_{12}\}$$

$$1_4 = \{D_{13}, D_{14}, D_{15}, D_{16}\}$$

When data strings $1_k$ (k = 1,..., 4) are input to the adder 2, the transformer 3 outputs four-point Fourier transform result $\{R_1, R_5, R_9, R_{13}\}$ or four-point inverse Fourier transform result $\{R'_1, R'_5, R'_9, R'_{13}\}$ to the outside as the transform result 4.

Therefore, in a case where an external circuit that receives the transform result 4 from the transformer 3 requires only four-point Fourier transform result $\{R_1, R_5, R_9, R_{13}\}$ out of 16-point Fourier transform result $\{R_1, R_{2,...,} R_{16}\}$, the Fourier transform device illustrated in FIG. 1 can be applied to the external circuit.

Likewise, in a case where an external circuit that receives the transform result 4 from the transformer 3 requires only four-point inverse Fourier transform result $\{R'_1, R'_5, R'_9, R'_{13}\}$ out of 16-point inverse Fourier transform result $\{R'_1, R'_{2,...,} R'_{16}\}$, the Fourier transform device illustrated in FIG. 1 can be applied to the external circuit.

The Fourier transform device illustrated in FIG. 1 has a processing speed about K times faster and a circuit scale of about one Kth of that of an FFT circuit that performs a K × M-point Fourier transform.

For example, if K = 3, the Fourier transform device illustrated in FIG. 1 has a processing speed about three times faster and a circuit scale of about one third.

For example, if K = 4, the Fourier transform device illustrated in FIG. 1 has a processing speed about four times faster and a circuit scale of about one quarter.

Note that since the circuit scale of the adder 2 is sufficiently smaller than the circuit scale of the transformer 3, the circuit scale of the adder 2 is not taken into consideration as the circuit scale of the Fourier transform device illustrated in FIG. 1.

In the first embodiment described above, $((k - 1)M + 1)$th data$(k = 1,..., K)$ in order starting from the first data, among $K \times M$ pieces of data, is head data in each of the K data strings, and the K data strings each contain M pieces of data each at every M pieces of data in order starting from each head data among the $K \times M$ pieces of data. The Fourier transform device includes: the adder 2 for calculating each sum of K pieces of data that are m-th data $(m = 1,..., M)$ in the order starting from each of the head data in the respective M pieces of data contained in the K data strings; and the transformer 3 for performing an M-point Fourier transform on the sums calculated by the adder 2 or an M-point inverse Fourier transform on the sums. Therefore, in a case where an external circuit, which is a subsequent circuit, requires only a part of a Fourier transform result or a part of an inverse Fourier transform result, it is possible to reduce the circuit scale in the Fourier transform device to even less than about half of the circuit scale of an FFT circuit that performs a $K \times M$-point Fourier transform.

Second Embodiment

In a second embodiment, a Fourier transform device including a first phase multiplier 5 and a second phase multiplier 6 in addition to the adder 2 and the transformer 3 will be described.

FIG. 5 is a configuration diagram illustrating the Fourier transform device according to the second embodiment.

FIG. 6 is a hardware configuration diagram illustrating the hardware of the Fourier transform device according to the second embodiment.

In the Fourier transform device illustrated in FIG. 5, "K" is an integer greater than or equal to 3, and "M" is an integer greater than or equal to 2 like in the Fourier transform device illustrated in FIG. 1.

In FIGS. 5 and 6, the same symbol as that in FIGS. 1 and 2 represents the same or a corresponding part, and thus description thereof is omitted.

The first phase multiplier 5 is implemented by, for example, a phase multiplication circuit 13 illustrated in FIG. 6.

The first phase multiplier 5 receives input of K pieces of data, which are m-th data in order starting from respective head data in respective M pieces of data contained in K data strings $1_k$ $(k = 1,..., K)$.

Each time the first phase multiplier 5 receives input of K pieces of data, the first phase multiplier 5 performs a phase shift of advancing the phase of each k-th data $(k = 1,..., K)$ by $2\pi(k - 1)s/K$ among the K pieces of data which have been received.

The first phase multiplier 5 outputs the K data strings $1_k$ each containing M pieces of data after the phase shift to the adder 2.

Symbol "s" is an integer within a range from 0 to $(K - 1)$ and is determined depending on an M-point Fourier transform result by the transformer 3 $\{R_{1+s}, R_{(K+1)+s}, R_{(2K+1))+S},..., R_{(M-1)K+1+s}\}$ or M-point inverse Fourier transform result $\{R'_{1+s}, R'_{(K+1)+s}, R'_{(2K+1)+s},..., R'_{(M-1)K+1+s}\}$. Specifically, for example, in a case where there is need to output four-point Fourier transform result $\{R_1, R_5, R_9, R_{13}\}$ or four-point inverse Fourier transform result $\{R'_1, R'_5, R'_9, R'_{13}\}$ to an external circuit where K = M = 4, "s" is determined to be 0.

For example, in a case where there is need to output four-point Fourier transform result $\{R_2, R_6, R_{10}, R_{14}\}$ or four-point inverse Fourier transform result $\{R'_2, R'_6, R'_{10}, R'_{14}\}$ to an external circuit where K = M = 4, "s" is determined to be 1.

Symbol "s" may be stored in an internal memory of each of the first phase multiplier 5 and the second phase multiplier 6 or may be given from the outside.

The second phase multiplier 6 is implemented by, for example, a phase multiplication circuit 14 illustrated in FIG. 6.

When the sum $\Sigma_m$ of K pieces of data, which is m-th data, is calculated by the adder 2, the second phase multiplier 6 performs a phase shift of delaying the phase of the sum of data $\Sigma_m$, which has been calculated, by $2\pi(m - 1)s/N$ and outputs the sum $\Sigma'_m$ after the phase shift to the transformer 3. $N = K \times M$.

In FIG. 5, it is assumed that each of the first phase multiplier 5, the adder 2, the second phase multiplier 6, and the transformer 3, which are components of the Fourier transform device, is implemented by dedicated hardware as illustrated in FIG. 6. That is, it is assumed that the Fourier transform device is implemented by the phase multiplication circuit 13, the addition circuit 11, the phase multiplication circuit 14, and the transform circuit 12.

Here, each of the phase multiplication circuit 13, the addition circuit 11, the phase multiplication circuit 14, and the transform circuit 12 corresponds to, for example, a single circuit, a composite circuit, a programmed processor, a parallel programmed processor, an ASIC, an FPGA, or a combination thereof.

The components of the Fourier transform device are not limited to those implemented by dedicated hardware, and the Fourier transform device may be implemented by software, firmware, or a combination of software and firmware.

In a case where the Fourier transform device is implemented by software, firmware, or the like, programs for causing a computer to execute the processing procedures performed in the first phase multiplier 5, the adder 2, the second phase multiplier 6, and the transformer 3 are stored in the memory 21 illustrated in FIG. 3. The processor 22 illustrated in FIG. 3 executes the programs stored in the memory 21.

Next, the operation of the Fourier transform device illustrated in FIG. 5 will be described.

The first phase multiplier 5 receives input of K pieces of data, which are m-th data (m = 1,..., M) in the order starting from respective head data in respective M pieces of data contained in K data strings $1_k$ (k = 1,..., K).

Each time the first phase multiplier 5 receives input of K pieces of data, the first phase multiplier 5 performs a phase shift of advancing the phase of k-th data among the K pieces of data, which have been received, by $2\pi$ (k - 1)s/K.

The first phase multiplier 5 outputs the K data strings $1_k$ each containing M pieces of data after the phase shift to the adder 2.

The specific phase shift of advancing the phase of kth data by the first phase multiplier 5 is as follows.

For example, if m = 1, the first phase multiplier 5 accepts input of data $D_1$, data $D_{M + 1}$, data $D_{2M + 1,...,}$ and data $D_{(K - 1)M + 1}$.

For example, if s = 0, the first phase multiplier 5 performs a phase shift of advancing the phase of each k-th data by 0 among the K pieces of data $\{D_1, D_{M + 1}, D_{2M + 1,...,} D_{(K - 1)M + 1}\}$ which have been received.

For example, if s = 1, the first phase multiplier 5 performs a phase shift of advancing the phase of each k-th data by $2\pi(k - 1)/K$ among the K pieces of data $\{D_1, D_{M + 1}, D_{2M + 1,...,} D_{(K - 1)M + 1}\}$ which have been received.

For example, if s = 2, the first phase multiplier 5 performs a phase shift of advancing the phase of each k-th data by $4\pi(k - 1)/K$ among the K pieces of data $\{D_1, D_{M + 1}, D_{2M + 1,...,} D_{(K - 1)M + 1}\}$ which have been received.

For example, if s = K - 1, the first phase multiplier 5 performs a phase shift of advancing the phase of each k-th data by $2\pi(k - 1)(K - 1)/K$ among the K pieces of data $\{D_1, D_{M + 1}, D_{2M + 1,...,} D_{(K - 1)M + 1}\}$ which have been received.

The adder 2 receives input of K pieces of data, which are m-th data (m = 1,..., M) in the order starting from respective head data in respective M pieces of data contained in the K data strings $1_k$ output from the first phase multiplier 5.

When the adder 2 receives the input of the K pieces of data which are m-th data, the adder 2 calculates the sum $\Sigma_m$ of the K pieces of data which have been received like the adder 2 illustrated in FIG. 1 does. Since m = 1,..., M, the adder 2 calculates the sum $\Sigma_m$ of the K pieces of data M times and outputs the M sums $\Sigma_m$ to the second phase multiplier 6.

When the sum $\Sigma_m$ of the K pieces of data, which is m-th data, is received from the adder 2, the second phase multiplier 6 performs a phase shift of delaying the phase of the sum $\Sigma_m$ of data that has been received by $2\pi(m - 1)s/N$. N = (K × M).

The second phase multiplier 6 outputs the sum $\Sigma'_m$ after the phase shift to the transformer 3.

The amount of phase shift of delaying the phase of the sum $\Sigma_m$ of K pieces of data by the second phase multiplier 6 is as follows.

For example, if s = 0, the amount of phase shift of delaying the phase of the sum $\Sigma_m$ is 0.

For example, if s = 1 and m = 1, the amount of phase shift of delaying the phase of the sum $\Sigma_m$ is 0.

For example, if s = 1 and m = 2, the amount of phase shift of delaying the phase of the sum $\Sigma_m$ is $2\pi/N$.

For example, if s = 1 and m = 3, the amount of phase shift of delaying the phase of the sum $\Sigma_m$ is $4\pi/N$.

For example, if s = 1 and m = M, the amount of phase shift of delaying the phase of the sum $\Sigma_m$ is $2\pi(M - 1)/N$.

For example, if s = 2 and m = 1, the amount of phase shift of delaying the phase of the sum $\Sigma_m$ is 0.

For example, if s = 2 and m = 2, the amount of phase shift of delaying the phase of the sum $\Sigma_m$ is $4\pi/N$.

For example, if s = 2 and m = 3, the amount of phase shift of delaying the phase of the sum $\Sigma_m$ is $8\pi/N$.

For example, if s = 2 and m = M, the amount of phase shift of delaying the phase of the sum $\Sigma_m$ is $4\pi(M - 1)/N$.

When the transformer 3 receives M sums $\Sigma'_m$ (m = 1,..., M) after phase shift from the second phase multiplier 6, the transformer 3 performs an M-point Fourier transform on the M sums $\Sigma'_m$ or an M-point inverse Fourier transform on the M sums $\Sigma'_m$.

The transformer 3 outputs M-point Fourier transform result $\{R_{1 + s}, R_{(K + 1) + s}, R_{(2K + 1) + s,...,} R_{(M - 1)K + 1 + s}\}$ or M-point inverse Fourier transform result $\{R'_{1 + s}, R'_{(K + 1) +}{}^s, R'_{(2K + 1) + s,...,} R'_{(M - 1)K + 1 + s}\}$ to the outside as a transform result 4.

For example, where K = M = 4, if s = 0, a Fourier transform result for M = 4 points is $\{R_1, R_5, R_9, R_{13}\}$, and an inverse Fourier transform result for M = 4 points is $\{R'_1, R'_5, R'_9, R'_{13}\}$.

For example, where K = M = 4, if s = 1, a Fourier transform result for M = 4 points is $\{R_2, R_6, R_{10}, R_{14}\}$, and an inverse Fourier transform result for M = 4 points is $\{R'_2, R'_6, R'_{10}, R'_{14}\}$.

The Fourier transform device illustrated in FIG. 5 has a processing speed about K times faster and a circuit scale of about one Kth of that of an FFT circuit that performs a Fourier transform of K × M points.

Since the circuit scales of the first phase multiplier 5, the adder 2, and the second phase multiplier 6 are sufficiently smaller than the circuit scale of the transformer 3, the circuit scales of the first phase multiplier 5, the adder 2, and the second phase multiplier 6 are not considered as the circuit scale of the Fourier transform device illustrated in FIG. 5.

In the Fourier transform device illustrated in FIG. 5, like in the Fourier transform device illustrated in FIG. 1, it is possible to reduce the circuit scale to even less than about half of the circuit scale of an FFT circuit that performs a $K \times M$-point Fourier transform in a case where an external circuit, which is a subsequent circuit, requires only a part of a Fourier transform result or a part of an inverse Fourier transform result.

In addition, the Fourier transform device illustrated in FIG. 5 can modify the transform result 4 of the transformer 3 by changing the value of s.

Third Embodiment

In the first and second embodiments, the Fourier transform device to which K data strings $1_k$ are input has been described.

In a third embodiment, description will be given on a Fourier transform device to which a data string 30 containing $K \times M$ pieces of data $\{D_1, D_{2,...}, D_M, D_{M+1}, D_{M+2,...}, D_{2M,...}, D_{(K-1)M+1}, D_{(K-1)M+2,...}, D_{K \times M}\}$ is input.

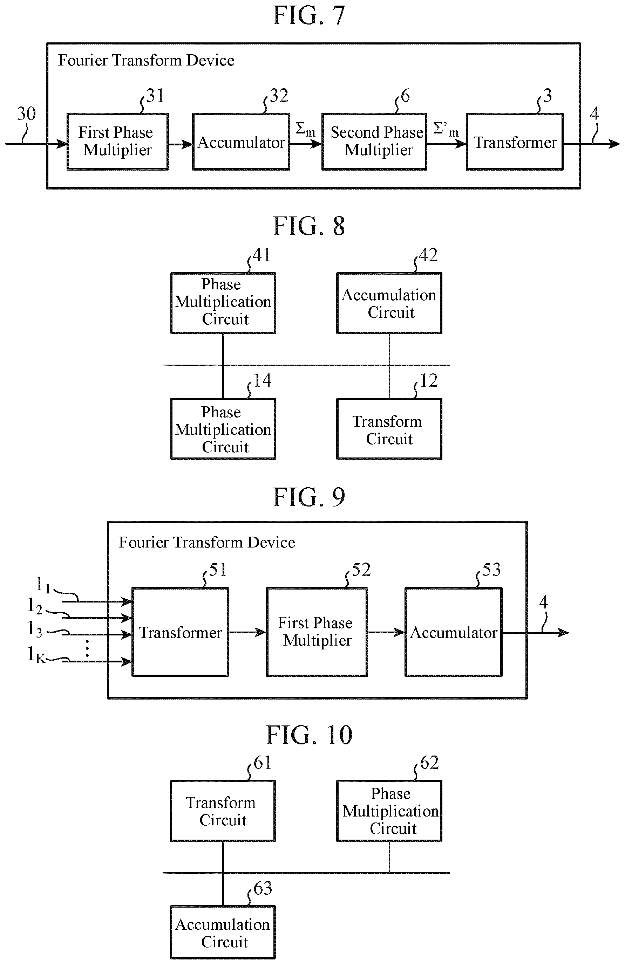

FIG. 7 is a configuration diagram illustrating the Fourier transform device according to the third embodiment.

FIG. 8 is a hardware configuration diagram illustrating the hardware of the Fourier transform device according to the third embodiment.

In the Fourier transform device illustrated in FIG. 7, "K" is an integer greater than or equal to 3, and "M" is an integer greater than or equal to 2 like in the Fourier transform device illustrated in FIG. 1.

In FIGS. 7 and 8, the same symbol as that in FIGS. 1, 2, 5, and 6 represents the same or a corresponding part, and thus description thereof is omitted.

The data string 30 contains $K \times M$ pieces of data $\{D_1, D_{2,...}, D_M, D_{M+1}, D_{M+2,...}, D_{2M,...}, D_{(K-1)M+1}, D_{(K-1)M+2,...}, D_{K \times M}\}$, and is input to a first phase multiplier 31 in order of data $D_1$, data $D_{2,...}$, data $D_{K \times M}$.

The first phase multiplier 31 is implemented by, for example, a phase multiplication circuit 41 illustrated in FIG. 8.

The first phase multiplier 31 performs a phase shift of advancing, by $2\pi(g-1)s/K$, the phase of each of g-th to (g + M)th data in order each starting from g-th data (g = 1, M + 1, 2M + 1,..., M × (K - 1) + 1) among $K \times M$ pieces of data.

The first phase multiplier 31 outputs the $K \times M$ pieces of data after the phase shift to an accumulator 32.

Symbol "s" is an integer within a range from 0 to (K - 1) and is determined depending on an M-point Fourier transform result by the transformer 3 $\{R_{1+s}, R_{(K+1)+s}, R_{(2K+1))+S,...}, R_{(M-1)K+1+s}\}$ or M-point inverse Fourier transform result $\{R'_{1+s}, R'_{(K+1)+s}, R'_{(2K+1)+s,...}, R'_{(M-1)K+1+s}\}$. Specifically, for example, in a case where there is need to output four-point Fourier transform result $\{R_1, R_5, R_9, R_{13}\}$ or four-point inverse Fourier transform result $\{R'_1, R'_5, R'_9, R'_{13}\}$ to an external circuit where K = M = 4, "s" is determined to be 0.

For example, in a case where there is need to output four-point Fourier transform result $\{R_2, R_6, R_{10}, R_{14}\}$ or four-point inverse Fourier transform result $\{R'_2, R'_6, R'_{10}, R'_{14}\}$ to an external circuit where K = M = 4, "s" is determined to be 1.

Symbol "s" may be stored in an internal memory of each of the first phase multiplier 5 and the second phase multiplier 6 or may be given from the outside.

The accumulator 32 is implemented by, for example, an accumulation circuit 42 illustrated in FIG. 8.

The accumulator 32 uses, as head data, every M pieces of data from first to m-th data in order starting from the first data among the $K \times M$ pieces of data after the phase shift that have been output from the first phase multiplier 31.

The accumulator 32 calculates each sum $\Sigma_m$ of K pieces of data at every M pieces of data in order each starting from m-th data (m = 1,..., M).

The accumulator 32 outputs the M sums $\Sigma_m$ that have been calculated to the second phase multiplier 6.

In FIG. 7, it is assumed that each of the first phase multiplier 31, the accumulator 32, the second phase multiplier 6, and the transformer 3, which are components of the Fourier transform device, is implemented by dedicated hardware as illustrated in FIG. 8. That is, it is assumed that the Fourier transform device is implemented by the phase multiplication circuit 41, the accumulation circuit 42, the phase multiplication circuit 14, and the transform circuit 12.

Here, each of the phase multiplication circuit 41, the accumulation circuit 42, the phase multiplication circuit 14, and the transform circuit 12 corresponds to, for example, a single circuit, a composite circuit, a programmed processor, a parallel programmed processor, an ASIC, an FPGA, or a combination thereof.

The components of the Fourier transform device are not limited to those implemented by dedicated hardware, and the Fourier transform device may be implemented by software, firmware, or a combination of software and firmware.

In a case where the Fourier transform device is implemented by software, firmware, or the like, programs for causing a computer to execute the processing procedures performed in the first phase multiplier 31, the accumulator 32, the second phase multiplier 6, and the transformer 3 are stored in the memory 21 illustrated in FIG. 3. The processor 22 illustrated in FIG. 3 executes the programs stored in the memory 21.

Next, the operation of the Fourier transform device illustrated in FIG. 7 will be described.

The first phase multiplier 31 accepts input of the data string 30 containing $K \times M$ pieces of data $\{D_1, D_{2,...}, D_M, D_{M+1}, D_{M+2,...}, D_{2M,...}, D_{(K-1)M+1}, D_{(K-1)M+2,...}, D_{K \times M}\}$.

The first phase multiplier 31 performs a phase shift of advancing, by $2\pi s/K$ ($s = 0, 1,..., K - 1$), the phase of each of g-th to (g + M)th data in order each starting from g th data ($g = 1, M + 1, 2M + 1,..., M \times (K - 1) + 1$) at every M pieces of data among the $K \times M$ pieces of data.

The first phase multiplier 31 outputs the $K \times M$ pieces of data after the phase shift to the accumulator 32.

The amount of phase shift of advancing the phase of each of g-th to (g + M)th data by the first phase multiplier 31 is as follows.

For example, if $K = M = 4$ and $g = 1$, the first phase multiplier 31 accepts input of data $\{D_1, D_2, D_3, D_4\}$.

The amount of phase shift of advancing the phase of data $\{D_1, D_2, D_3, D_4\}$ is 0.

For example, if $K = M = 4$ and $g = M + 1 = 5$, the first phase multiplier 31 accepts input of data $\{D_5, D_6, D_7, D_8\}$.

The amount of phase shift of advancing the phase of data $\{D_5, D_6, D_7, D_8\}$ is 0 if $s = 0$.

The amount of phase shift of advancing the phase of data $\{D_5, D_6, D_7, D_8\}$ is $2\pi \times 1/4 = \pi/2$ if $s = 1$.

The amount of phase shift of advancing the phase of data $\{D_5, D_6, D_7, D_8\}$ is $2\pi \times 2/4 = \pi$ if $s = 2$.

The amount of phase shift of advancing the phase of data $\{D_5, D_6, D_7, D_8\}$ is $2\pi \times 3/4 = 3\pi/2$ if $s = 3$.

The accumulator 32 uses, as head data, every M pieces of data from first to m-th data in order starting from the first data among the $K \times M$ pieces of data after the phase shift that have been output from the first phase multiplier 31.

Then, the accumulator 32 calculates each sum $\Sigma_m$ of K pieces of data at every M pieces of data in order each starting from m-thdata ($m = 1,..., M$).

The accumulator 32 outputs the M sums $\Sigma_m$ that have been calculated to the second phase multiplier 6.

The specific calculation of a sum of K pieces of data by the accumulator 32 is as follows.

For example, let us assume $K = M = 4$ and $g = 1, 5, 9, 13$.

First, since $g = 1$, when the accumulator 32 receives data $\{D_1, D_2, D_3, D_4\}$ after the phase shift from the first phase multiplier 31, the accumulator 32 holds the data $\{D_1, D_2, D_3, D_4\}$ after the phase shift.

Next, since $g = 5$, when the accumulator 32 receives data $\{D_5, D_6, D_7, D_8\}$ after the phase shift from the first phase multiplier 31, the accumulator 32 adds the data $\{D_5, D_6, D_7, D_8\}$ after the phase shift to the data $\{D_1, D_2, D_3, D_4\}$ that is held, respectively.

The accumulator 32 holds data $\{D_1 + D_5, D_2 + D_6, D_3 + D_7, D_4 + D_8\}$ as the result of each addition.

Next, since $g = 9$, when the accumulator 32 receives data $\{D_9, D_{10}, D_{11}, D_{12}\}$ after the phase shift from the first phase multiplier 31, the accumulator 32 adds the data $\{D_9, D_{10}, D_{11}, D_{12}\}$ after the phase shift to the data $\{D_1 + D_5, D_2 + D_6, D_3 + D_7, D_4 + D_8\}$ that is held, respectively.

The accumulator 32 holds data $\{D_1 + D_5 + D_9, D_2 + D_6 + D_{10}, D_3 + D_7 + D_{11}, D_4 + D_8 + D_{12}\}$ as the result of each addition.

Lastly, since $g = 13$, when the accumulator 32 receives data $\{D_{13}, D_{14}, D_{15}, D_{16}\}$ after the phase shift from the first phase multiplier 31, the accumulator 32 adds the data $\{D_{13}, D_{14}, D_{15}, D_{16}\}$ after the phase shift to the data $\{D_1 + D_5 + D_9, D_2 + D_6 + D_{10}, D_3 + D_7 + D_{11}, D_4 + D_8 + D_{12}\}$ that is held, respectively.

The accumulator 32 outputs data $\{D_1 + D_5 + D_9 + D_{13}, D_2 + D_6 + D_{10} + D_{14}, D_3 + D_7 + D_{11} + D_{15}, D_4 + D_8 + D_{12} + D_{16}\}$ as $M = 4$ sums $\{\Sigma_1, \Sigma_2, \Sigma_3, \Sigma_4\}$ to the second phase multiplier 6 as results of the respective additions.

$$\Sigma_1 = D_1 + D_5 + D_9 + D_{13}$$

$$\Sigma_2 = D_2 + D_6 + D_{10} + D_{14}$$

$$\Sigma_3 = D_3 + D_7 + D_{11} + D_{15}$$

$$\Sigma_4 = D_4 + D_8 + D_{12} + D_{16}$$

When the second phase multiplier 6 receives the sums $\Sigma_m$ of K pieces of data containing data starting from m-th data from the accumulator 32, the second phase multiplier 6 performs a phase shift of delaying the phase of each of the sums $\Sigma_m$ of data that has been received by $2\pi(m - 1)s/N$ like the second phase multiplier 6 illustrated in FIG. 5 does.

The second phase multiplier 6 outputs the sum $\Sigma'_m$ after the phase shift to the transformer 3.

When the transformer 3 receives M sums $\Sigma'_m$ after the phase shift from the second phase multiplier 6, the transformer 3 performs an M-point Fourier transform on the M sums $\Sigma'_m$ or an M-point inverse Fourier transform on the

M sums $\Sigma'_m$ like the transformer 3 illustrated in FIG. 5 does.

The transformer 3 outputs M-point Fourier transform result $\{R_{1 + s}, R_{(K + 1) + s}, R_{(2K + 1) + s},..., R_{(M - 1)K + 1 + s}\}$ or M-point inverse Fourier transform result $\{R'_{1 + s}, R'_{(K + 1) + s}, R'_{(2K + 1) + s},..., R'_{(M - 1)K + 1 + s}\}$ to the outside as a transform result 4.

For example, where K = M = 4, if s = 0, a Fourier transform result for M = 4 points is $\{R_1, R_5, R_9, R_{13}\}$, and an inverse Fourier transform result for M = 4 points is $\{R'_1, R'_5, R'_9, R'_{13}\}$.

For example, where K = M = 4, if s = 1, a Fourier transform result for M = 4 points is $\{R_2, R_6, R_{10}, R_{14}\}$, and an inverse Fourier transform result for M = 4 points is $\{R'_2, R'_6, R'_{10}, R'_{14}\}$.

The Fourier transform device illustrated in FIG. 7 has a circuit scale of about one Kth of that of an FFT circuit that performs a Fourier transform of $K \times M$ points.

Since the circuit scales of the first phase multiplier 31, the accumulator 32, and the second phase multiplier 6 are sufficiently smaller than the circuit scale of the transformer 3, the circuit scales of the first phase multiplier 31, the accumulator 32, and the second phase multiplier 6 are not considered as the circuit scale of the Fourier transform device illustrated in FIG. 7.

In the Fourier transform device illustrated in FIG. 7, like in the Fourier transform device illustrated in FIG. 1, it is possible to reduce the circuit scale to even less than about half of the circuit scale of an FFT circuit that performs a $K \times M$-point Fourier transform in a case where an external circuit, which is a subsequent circuit, requires only a part of a Fourier transform result or a part of an inverse Fourier transform result.

In addition, the Fourier transform device illustrated in FIG. 7 can modify the transform result 4 of the transformer 3 by changing the value of s.

Fourth Embodiment

In the Fourier transform devices of the first to third embodiments, the component in the last stage among all the components is the transformer 3.

In a fourth embodiment, a Fourier transform device in which the component in the first stage among all the components is a transformer 51 will be described.

FIG. 9 is a configuration diagram illustrating the Fourier transform device according to the fourth embodiment. In FIG. 9, the same symbol as that in FIG. 1 represents the same or a corresponding part, and thus description thereof is omitted.

FIG. 10 is a hardware configuration diagram illustrating the hardware of the Fourier transform device according to the fourth embodiment.

K data strings $1_k$ (k = 1,..., K) are input to the Fourier transform device illustrated in FIG. 9.

In the Fourier transform device illustrated in FIG. 9, "K" is an integer greater than or equal to 2, and "M" is an integer greater than or equal to 3.

The transformer 51 is implemented by, for example, a transform circuit 61 illustrated in FIG. 10.

The transformer 51 receives input of K pieces of data, each of which is m-th data (m = 1,..., M) in order each starting from head data in M pieces of data contained in each of the K data strings $1_k$.

The transformer 51 performs a K-point Fourier transform on m-th K pieces of data that has received or a K-point inverse Fourier transform on the K pieces of data.

The transformer 51 outputs the K-point Fourier transform result or the K-point inverse Fourier transform result to a first phase multiplier 52 each time a K-point Fourier transform or a K-point inverse Fourier transform is performed.

The Fourier transform performed by the transformer 51 is not limited to fast Fourier transforms but also includes discrete Fourier transforms.

Likewise, the inverse Fourier transform performed by the transformer 51 is not limited to inverse fast Fourier transforms but also includes inverse discrete Fourier transforms.

The first phase multiplier 52 is implemented by, for example, a phase multiplication circuit 62 illustrated in FIG. 10.

The first phase multiplier 52 performs a phase shift of delaying each of the phase of a k-th transform result (k = 1,..., K) of an m-th times (m = 1,..., M) of Fourier transform or each of the phase of a k-th transform result of an m-th times of inverse Fourier transform by $2\pi ((m - 1) \times (k - 1)/N)$ by the transformer 51. $N = K \times M$.

The first phase multiplier 52 outputs the $K \times M$ transform results after the phase shift to an accumulator 53.

The accumulator 53 is implemented by, for example, an accumulation circuit 63 illustrated in FIG. 10.

The accumulator 53 uses, as a head transform result, each of M transform results from first to M-th transform results in order starting from the first transform result among the $K \times M$ transform results after the phase shift that have been output from the first phase multiplier 52.

The accumulator 53 calculates each sum of K transform results at every M transform results in order starting from each head transform result.

The accumulator 53 outputs each of the sums that have been calculated to the outside.

In FIG. 9, it is assumed that each of the transformer 51, the first phase multiplier 52, and the accumulator 53, which are components of the Fourier transform device, is implemented by dedicated hardware as illustrated in FIG. 10. That is, it is assumed that the Fourier transform device is implemented by the transform circuit 61, the phase multiplication circuit 62, and the accumulation circuit 63.

Here, each of the transform circuit 61, the phase multiplication circuit 62, and the accumulation circuit 63 corresponds to, for example, a single circuit, a composite circuit, a programmed processor, a parallel programmed processor, an ASIC, an FPGA, or a combination thereof.

The components of the Fourier transform device are not limited to those implemented by dedicated hardware, and the Fourier transform device may be implemented by software, firmware, or a combination of software and firmware.

In a case where the Fourier transform device is implemented by software, firmware, or the like, programs for causing a computer to execute the processing procedures performed in the transformer 51, the first phase multiplier 52, and the accumulator 53 are stored in the memory 21 illustrated in FIG. 3. The processor 22 illustrated in FIG. 3 executes the programs stored in the memory 21.

Next, the operation of the Fourier transform device illustrated in FIG. 9 will be described.

The transformer 51 receives input of K pieces of data, each of which is m-th data (m = 1,..., M) in order each starting from head data in M pieces of data contained in each of the K data strings $1_k$.

Each time input of K pieces of data is received, the transformer 51 performs a K-point Fourier transform on the K pieces of data that have been received or a K-point inverse Fourier transform on the K pieces of data.

The transformer 51 outputs the K-point Fourier transform result or the K-point inverse Fourier transform result to the first phase multiplier 52 each time a K-point Fourier transform or a K-point inverse Fourier transform is performed.

Since m = 1,..., M, the transformer 51 performs a K-point Fourier transform or a K-point inverse Fourier transform M times.

The K-point Fourier transform or the K-point inverse Fourier transform by the transformer 51 is as follows.

For example, where K = M = 4 and K $\times$ M (= 16) pieces of data are $\{D_1, D_{2,...,} D_{16}\}$, then data string $1_k$ (k = 1,..., 4) is as follows.

$$1_1 = \{D_1, D_2, D_3, D_4\}$$

$$1_2 = \{D_5, D_6, D_7, D_8\}$$

$$1_3 = \{D_9, D_{10}, D_{11}, D_{12}\}$$

$$1_4 = \{D_{13}, D_{14}, D_{15}, D_{16}\}$$

Therefore, when m = 1, the transformer 51 performs a four-point Fourier transform or a four-point inverse Fourier transform on data $\{D_1, D_5, D_9, D_{13}\}$.

The transformer 51 outputs four-point Fourier transform result $\{F_1, F_5, F_9, F_{13}\}$ or four-point inverse Fourier transform result $\{F'_1, F'_5, F'_9, F'_{13}\}$ to the first phase multiplier 52 as a transform result.

When m = 2, the transformer 51 performs a four-point Fourier transform or a four-point inverse Fourier transform on data $\{D_2, D_6, D_{10}, D_{14}\}$.

The transformer 51 outputs four-point Fourier transform result $\{F_2, F_6, F_{10}, F_{14}\}$ or four-point inverse Fourier transform result $\{F'_2, F'_6, F'_{10}, F'_{14}\}$ to the first phase multiplier 52 as a transform result.

When m = 3, the transformer 51 performs a four-point Fourier transform or a four-point inverse Fourier transform on data $\{D_3, D_7, D_{11}, D_{15}\}$.

The transformer 51 outputs four-point Fourier transform result $\{F_3, F_7, F_{11}, F_{15}\}$ or four-point inverse Fourier transform result $\{F'_3, F'_7, F'_{11}, F'_{15}\}$ to the first phase multiplier 52 as a transform result.

When m = 4, the transformer 51 performs a four-point Fourier transform or a four-point inverse Fourier transform on data $\{D_4, D_8, D_{12}, D_{16}\}$.

The transformer 51 outputs four-point Fourier transform result $\{F_4, F_8, F_{12}, F_{16}\}$ or four-point inverse Fourier transform result $\{F'_4, F'_8, F'_{12}, F'_{16}\}$ to the first phase multiplier 52 as a transform result.

The first phase multiplier 52 receives input of the K $\times$ M transform results from the transformer 51.

For example, if K = M = 4, the first phase multiplier 52 receives input of Fourier transform result $\{F_1, F_5, F_9, F_{13}, F_2, F_6, F_{10}, F_{14}, F_3, F_7, F_{11}, F_{15}, F_4, F_8, F_{12}, F_{16}\}$ as a transform result. Alternatively, the first phase multiplier 52 receives input of inverse Fourier transform result $\{F'_1, F'_5, F'_9, F'_{13}, F'_2, F'_6, F'_{10}, F'_{14}, F'_3, F'_7, F'_{11}, F'_{15}, F'_4, F'_8, F'_{12},$

F'$_{16}$} as a transform result.

The first phase multiplier 52 performs a phase shift of delaying each of the phase of a k-th transform result (k = 1,..., K) of an m-th times (m = 1,..., M) of Fourier transform or each of the phase of a k-th transform result of an m-th times of inverse Fourier transform by $2\pi$ ((m - 1) $\times$ (k - 1)/N) by the transformer 51.

The first phase multiplier 52 outputs the K $\times$ M transform results after the phase shift to an accumulator 53.

The phase shift of delaying the phase of a k-th transform result of an m-th times of Fourier transform by the first phase multiplier 52 is as follows. For example, let us assume that K = M = 4.

For example, when m = 1, the phase shift of delaying the phase of a k-th transform result (k = 1,..., K) in a Fourier transform is 0.

For example, when m = 2, the phase shift of delaying the phase of a k = first transform result is 0, and the phase shift of delaying the phase of a k = second transform result is $2\pi$ (1 $\times$ 1/16) = $\pi/8$.

The phase shift of delaying the phase of a k = third transform result is $2\pi$ (1 $\times$ 2/16) = $\pi/4$, and the phase shift of delaying the phase of a k = fourth transform result is $2\pi$ (1 $\times$ 3/16) = $3\pi/8$.

The accumulator 53 uses, as a head transform result, each of M transform results from first to M-th transform results in order starting from the first transform result among the K $\times$ M transform results after the phase shift that have been output from the first phase multiplier 52.

The accumulator 53 then calculates each sum of K transform results at every M transform results in order starting from each head transform result.

The accumulator 53 outputs each of the sums that have been calculated to the outside.

The calculation of a sum of K transform results by the accumulator 53 is as follows.

For example, let us assume K = M = 4 and m = 1,..., 4. Let us also assume that a sum of transform results is a sum of Fourier transform results.

First, since m = 1, the accumulator 53 holds Fourier transform result {F$_1$, F$_5$, F$_9$, F$_{13}$} when Fourier transform result {F$_1$, F$_5$, F$_9$, F$_{13}$} is received from the first phase multiplier 52.

Next, since m = 2, the accumulator 53 adds Fourier transform result {F$_2$, F$_6$, F$_{10}$, F$_{14}$} to Fourier transform result {F$_1$, F$_5$, F$_9$, F$_{13}$} that is held, respectively, when Fourier transform result {F$_2$, F$_6$, F$_{10}$, F$_{14}$} is received from the first phase multiplier 52.

The accumulator 53 holds {F$_1$ + F$_2$, F$_5$ + F$_6$, F$_9$ + F$_{10}$, F$_{13}$ + F$_{14}$} as respective addition results.

Next, since m = 3, the accumulator 53 adds Fourier transform result {F$_3$, F$_7$, F$_{11}$, F$_{15}$} to {F$_1$ + F$_2$, F$_5$ + F$_6$, F$_9$ + F$_{10}$, F$_{13}$ + F$_{14}$} that is held, respectively, when Fourier transform result {F$_3$, F$_7$, F$_{11}$, F$_{15}$} is received from the first phase multiplier 52.

The accumulator 53 holds {F$_1$ + F$_2$ + F$_3$, F$_5$ + F$_6$ + F$_7$, F$_9$ + F$_{10}$ + F$_{11}$, F$_{13}$ + F$_{14}$ + F$_{15}$} as respective addition results.

Next, since m = 4, the accumulator 53 adds Fourier transform result {F$_4$, F$_8$, F$_{12}$, F$_{16}$} to {F$_1$ + F$_2$ + F$_3$, F$_5$ + F$_6$ + F$_7$, F$_9$ + F$_{10}$ + F$_{11}$, F$_{13}$ + F$_{14}$ + F$_{15}$} that is held, respectively, when Fourier transform result {F$_4$, F$_8$, F$_{12}$, F$_{16}$} is received from the first phase multiplier 52.

The accumulator 53 outputs Fourier transform results {F$_1$ + F$_2$ + F$_3$ + F$_4$, F$_5$ + F$_6$ + F$_7$ + F$_8$, F$_9$ + F$_{10}$ + F$_{11}$ + F$_{12}$, F$_{13}$ + F$_{14}$ + F$_{15}$ + F$_{16}$} as respective addition results {$\Sigma_1$, $\Sigma_2$, $\Sigma_3$, $\Sigma_4$} to the outside.

$$\Sigma_1 = F_1 + F_2 + F_3 + F_4$$

$$\Sigma_2 = F_5 + F_6 + F_7 + F_8$$

$$\Sigma_3 = F_9 + F_{10} + F_{11} + F_{12}$$

$$\Sigma_4 = F_{13} + F_{14} + F_{15} + F_{16}$$

The addition results {$\Sigma_1$, $\Sigma_2$, $\Sigma_3$, $\Sigma_4$} correspond to four-point Fourier transform result {R$_1$, R$_2$, R$_3$, R$_4$} out of 16-point Fourier transform result {R$_1$, R$_{2,...,}$ R$_{16}$}.

Therefore, in a case where an external circuit that receives the addition results from the accumulator 53 requires only four-point Fourier transform result {R$_1$, R$_2$, R$_3$, R$_4$} out of 16-point Fourier transform result {R$_1$, R$_{2,...,}$ R$_{16}$}, the Fourier transform device illustrated in FIG. 9 can be applied to the external circuit.

Likewise, in a case where an external circuit that receives the addition results from the accumulator 53 requires only four-point inverse Fourier transform result {R'$_1$, R'$_2$, R'$_3$, R'$_4$} out of 16-point inverse Fourier transform result {R'$_1$, R'$_{2,...,}$ R'$_{16}$}, the Fourier transform device illustrated in FIG. 9 can be applied to the external circuit.

The Fourier transform device illustrated in FIG. 9 has a circuit scale of about one M-th of that of an FFT circuit that performs a Fourier transform of K × M points.

For example, if M = 3, the Fourier transform device illustrated in FIG. 9 has a circuit scale of about one-third.

For example, if M = 4, the Fourier transform device illustrated in FIG. 9 has a circuit scale of about one-fourth.

Since the circuit scales of the first phase multiplier 52 and the accumulator 53 are sufficiently smaller than the circuit scale of the transformer 51, the circuit scales of the first phase multiplier 52 and the accumulator 53 are not considered as the circuit scale of the Fourier transform device illustrated in FIG. 9.

In the Fourier transform device illustrated in FIG. 9, like in the Fourier transform device illustrated in FIG. 1, it is possible to reduce the circuit scale to even less than about half of the circuit scale of an FFT circuit that performs a K × M-point Fourier transform in a case where an external circuit, which is a subsequent circuit, requires only a part of a Fourier transform result or a part of an inverse Fourier transform result.

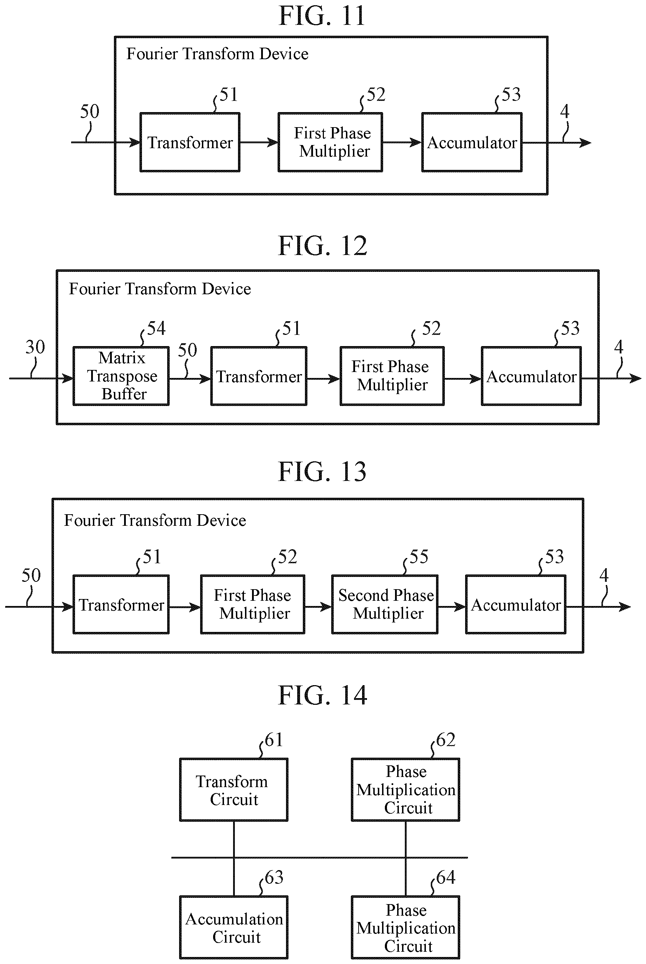

In the Fourier transform device illustrated in FIG. 9, an example in which K data strings $1_k$ (k = 1,..., K) are input is illustrated. However, no limitation is intended to this, and as illustrated in FIG. 11, a data string 50 containing K × M pieces of data may be input to the Fourier transform device. FIG. 11 is a configuration diagram illustrating another Fourier transform device according to the fourth embodiment. Note that the order of K × M pieces of data contained in the data string 50 is (k - 1)M + m.

Values k and m, which determine the order of the K × M pieces of data contained in the data string 50, vary as follows.

$$(k = 1, m = 1), (k = 2, m = 1),..., (k = K, m = 1), (k = 1, m = 2), (k = 2, m = 2),..., (k = K, m = 2),..., (k = 1, m = M), (k = 2, m = M),..., (k = K, m = M))$$

In a case where the data string 50 is input, the transformer 51 receives input of K pieces of data sequentially in order from the head data among the K × M pieces of data $\{D_1, D_5, D_9, D_{13}, D_2, D_6, D_{10}, D_{14,....,} D_{K \times M}\}$ contained in the data string 50.

Each time input of K pieces of data is received, the transformer 51 performs a K-point Fourier transform on the K pieces of data that have been received or a K-point inverse Fourier transform on the K pieces of data like the transformer 51 illustrated in FIG. 9 does.

In the Fourier transform device illustrated in FIG. 11, an example in which the data string 50 is input is illustrated. However, this is merely an example, and as illustrated in FIG. 12, a matrix transpose buffer 54, which rearranges the order of the K × M pieces of data contained in a data string 30 into the order of the K × M pieces of data contained in the data string 50, may be provided as a preceding stage to the transformer 51.

FIG. 12 is a configuration diagram illustrating another Fourier transform device according to the fourth embodiment.

Fifth Embodiment

In a fifth embodiment, a Fourier transform device obtained by adding a second phase multiplier 55 to the Fourier transform device illustrated in FIG. 9, FIG. 11, or FIG. 12 will be described.

FIG. 13 is a configuration diagram illustrating the Fourier transform device according to the fifth embodiment.

FIG. 14 is a hardware configuration diagram illustrating the hardware of the Fourier transform device according to the fifth embodiment.

In FIGS. 13 and 14, the same symbol as that in FIGS. 9 to 12 represents the same or a corresponding part, and thus description thereof is omitted.

In the Fourier transform device illustrated in FIG. 13, "K" is an integer greater than or equal to 2, and "M" is an integer greater than or equal to 3.

The second phase multiplier 55 is implemented, for example, by a phase multiplication circuit 64 illustrated in FIG. 14.

The second phase multiplier 55 modifies each of the phases of K × M transform results after a phase shift output from a first phase multiplier 52 depending on a sum of K transform results to be calculated by an accumulator 53 and outputs the K × M transform results after the phase modification to the accumulator 53.

In the Fourier transform device illustrated in FIG. 13, the second phase multiplier 55 is mounted on the Fourier transform device illustrated in FIG. 11. However, this is merely an example, and, in a Fourier transform device, the second phase multiplier 55 may be mounted on the Fourier transform device illustrated in FIG. 9 or FIG. 12.

In FIG. 13, it is assumed that each of the transformer 51, the first phase multiplier 52, the second phase multiplier 55, and the accumulator 53, which are components of the Fourier transform device, is implemented by dedicated hardware as illustrated in FIG. 14. That is, it is assumed that the Fourier transform device is implemented by a transform circuit 61, a phase multiplication circuit 62, the phase multiplication circuit 64, and an accumulation circuit 63.

Here, each of the transform circuit 61, the phase multiplication circuit 62, the phase multiplication circuit 64, and the accumulation circuit 63 corresponds to, for example, a single circuit, a composite circuit, a programmed processor, a parallel programmed processor, an ASIC, an FPGA, or a combination thereof.

The components of the Fourier transform device are not limited to those implemented by dedicated hardware, and the Fourier transform device may be implemented by software, firmware, or a combination of software and firmware.

In a case where the Fourier transform device is implemented by software, firmware, or the like, programs for causing a computer to execute the processing procedures performed in the transformer 51, the first phase multiplier 52, the second phase multiplier 55, and the accumulator 53 are stored in the memory 21 illustrated in FIG. 3. The processor 22 illustrated in FIG. 3 executes the programs stored in the memory 21.

Next, the operation of the Fourier transform device illustrated in FIG. 13 will be described. Note that only the operation of the second phase multiplier 55 will be described here since operation other than that of the second phase multiplier 55 is similar to that of the Fourier transform device illustrated in FIG. 9, FIG. 11, or FIG. 12. The second phase multiplier 55 modifies each of the phases of $K \times M$ transform results output from the first phase multiplier 52 depending on addition results $\{\Sigma_{1+h},..., \Sigma_{K+h}\}$ ($h = 0, K, 2K,..., (M \times K) - K$) to be calculated by the accumulator 53.

The second phase multiplier 55 outputs the $K \times M$ transform results after the phase modification to the accumulator 53.

The specific modification of the phases by the second phase multiplier 55 is as follows.

(1) In a case where $h = 0$ and addition results to be calculated by the accumulator 53 are $\{\Sigma_{1},..., \Sigma_{K}\}$:
The second phase multiplier 55 does not modify the phases of the $K \times M$ transform results output from the first phase multiplier 52.

(2) In a case where $h = K$ and addition results to be calculated by the accumulator 53 are $\{\Sigma_{K+1},..., \Sigma_{2K}\}$:
The second phase multiplier 55 sets the amount of phase shift to 0 for the phases of the first K transform results in the order of arrangement among the $K \times M$ transform results. The second phase multiplier 55 increases the amount of phase shift for the phases of K transform results by $2\pi/M$ each time the place in the order is increased by K.

(3) In a case where $h = 2K$ and addition results to be calculated by the accumulator 53 are $\{\Sigma_{2K+1},..., \Sigma_{3K}\}$:
The second phase multiplier 55 sets the amount of phase shift to 0 for the phases of the first K transform results in the order of arrangement among the $K \times M$ transform results. The second phase multiplier 55 increases the amount of phase shift for the phases of K transform results by $(2\pi/M) \times 2$ each time the place in the order is increased by K.

(4) In a case where $h = 3K$ and addition results to be calculated by the accumulator 53 are $\{\Sigma_{3K+1},..., \Sigma_{4K}\}$:
The second phase multiplier 55 sets the amount of phase shift to 0 for the phases of the first K transform results in the order of arrangement among the $K \times M$ transform results. The second phase multiplier 55 increases the amount of phase shift for the phases of K transform results by $(2\pi/M) \times 3$ each time the place in the order is increased by K.

(5) In a case where $h = (M \times K) - K$ and addition results to be calculated by the accumulator 53 are $\{\Sigma_{(M \times K) - K + 1},..., \Sigma_{M \times K}\}$:
The second phase multiplier 55 sets the amount of phase shift to 0 for the phases of the first K transform results in the order of arrangement among the $K \times M$ transform results. The second phase multiplier 55 increases the amount of phase shift for the phases of K transform results by $(2\pi/M) \times (M - 1)$ each time the place in the order is increased by K.

For example, if $K = M = 4$, the specific modification of the phases by the second phase multiplier 55 is as follows.

(1) In a case where addition results $\{\Sigma_{1}, \Sigma_{2}, \Sigma_{3}, \Sigma_{4}\}$ to be calculated by the accumulator 53 are made to correspond to four-point Fourier transform result $\{R_{1}, R_{2}, R_{3}, R_{4}\}$ among the 16-point Fourier transform result:
In this case, $h = 0$, and the second phase multiplier 55 does not modify the phases of the sixteen transform results output from the first phase multiplier 52.

(2) In a case where addition results $\{\Sigma_{1}, \Sigma_{2}, \Sigma_{3}, \Sigma_{4}\}$ to be calculated by the accumulator 53 are made to correspond to four-point Fourier transform result $\{R_{5}, R_{6}, R_{7}, R_{8}\}$ among the 16-point Fourier transform result:

In this case, $h = K$, and the second phase multiplier 55 does not modify the phases of the first four transform results in the order of the sixteen transform results output from the first phase multiplier 52.
The second phase multiplier 55 advances the phases of the following four transform results in the order by $2\pi/M = \pi/2$.
The second phase multiplier 55 advances the phases of the following four transform results in the order by $(2\pi/M) \times 2 = \pi$.
The second phase multiplier 55 advances the phases of the following four transform results in the order by

$(2\pi/M) \times 3 = 3\pi/2$.

(3) In a case where addition results $\{\Sigma_1, \Sigma_2, \Sigma_3, \Sigma_4\}$ to be calculated by the accumulator 53 are made to correspond to four-point Fourier transform result $\{R_9, R_{10}, R_{11}, R_{12}\}$ among the 16-point Fourier transform result.

In this case, h = 2K, and the second phase multiplier 55 does not modify the phases of the first four transform results in the order of the sixteen transform results output from the first phase multiplier 52.
The second phase multiplier 55 advances the phases of the following four transform results in the order by $(2\pi/M) \times 2 = \pi$.
The second phase multiplier 55 advances the phases of the following four transform results in the order by $(2\pi/M) \times 2 \times 2 = 2\pi$.
The second phase multiplier 55 advances the phases of the following four transform results in the order by $(2\pi/M) \times 2 \times 3 = 3\pi$.

(4) In a case where addition results $\{\Sigma_1, \Sigma_2, \Sigma_3, \Sigma_4\}$ to be calculated by the accumulator 53 are made to correspond to four-point Fourier transform result $\{R_{13}, R_{14}, R_{15}, R_{16}\}$ among the 16-point Fourier transform result.

In this case, h = 3K, and the second phase multiplier 55 does not modify the phases of the first four transform results in the order of the sixteen transform results output from the first phase multiplier 52.
The second phase multiplier 55 advances the phases of the following four transform results in the order by $(2\pi/M) \times 3 = 3\pi/2$.
The second phase multiplier 55 advances the phases of the following four transform results in the order by $(2\pi/M) \times 3 \times 2 = 3\pi$.
The second phase multiplier 55 advances the phases of the following four transform results in the order by $(2\pi/M) \times 3 \times 3 = 9\pi/2$.

In the fifth embodiment described above, the Fourier transform device includes the second phase multiplier 55 for modifying each of the phases of K $\times$ M transform results after the phase shift that have been output from the first phase multiplier 52 depending on a sum of K transform results to be calculated by the accumulator 53. Therefore, in a case where an external circuit, which is a subsequent circuit, requires only a part of a Fourier transform result or a part of an inverse Fourier transform result, it is possible to reduce the circuit scale in the Fourier transform device to even less than about half of the circuit scale of an FFT circuit that performs a K $\times$ M-point Fourier transform and also to modify the Fourier transform result output to the external circuit or the inverse Fourier transform result output to the external circuit.
The Fourier transform device illustrated in FIG. 13 includes the first phase multiplier 52 and the second phase multiplier 55. However, this is merely an example, and the Fourier transform device may include a phase multiplier having the functions of the first phase multiplier 52 and the second phase multiplier 55.
Incidentally, within the scope of the present invention, the present invention may include a flexible combination of the embodiments, a modification of any component of the embodiments, or an omission of any component in the embodiments.

INDUSTRIAL APPLICABILITY

The present invention is suitable for Fourier transform devices and Fourier transform methods for performing Fourier transforms or inverse Fourier transforms.

REFERENCE SIGNS LIST

$1_1$, $1_2$, $1_{3,...}$, and $1_K$: data string,

2:           adder,
3:           transformer,
4:           transform result,
5:           first phase multiplier,
6:           second phase multiplier,
11:          addition circuit,
12:          transform circuit,
13 and 14:   phase multiplication circuit,
21:          memory,

**22:** processor,
**30:** data string,
**31:** first phase multiplier,
**32:** accumulator,
**41:** phase multiplication circuit,
**42:** accumulation circuit,
**50:** data string,
**51:** transformer,
**52:** first phase multiplier,
**53:** accumulator,
**54:** matrix transpose buffer,

**55:** second phase multiplier,
**61:** transform circuit,
**62:** phase multiplication circuit,
**63:** accumulation circuit, and
**64:** phase multiplication circuit

**Claims**

1. A Fourier transform device, wherein, among K × M pieces of data ("K" is an integer greater than or equal to 3, and "M" is an integer greater than or equal to 2), ((k - 1)M + 1)th data (k = 1,..., K) in order starting from first data is head data in each of K data strings, and the K data strings each contain M pieces of data each at every M pieces of data in order starting from each head data among the K × M pieces of data, the Fourier transform device comprising:

   an adder for calculating each sum of K pieces of data that are m-th data (m = 1,..., M) in the order starting from each of the head data in the respective M pieces of data contained in the K data strings; and
   a transformer for performing an M-point Fourier transform on the sums calculated by the adder or an M-point inverse Fourier transform on the sums.

2. The Fourier transform device according to claim 1, further comprising:

   a first phase multiplier for performing a phase shift of advancing a phase of each of k-th data (k = 1,..., K) by $2\pi$ (k - 1)s/K ("s" is an integer between zero and (K - 1)) among K pieces of data which are m-th data in order starting from respective head data in respective M pieces of data contained in the K data strings and outputting, to the adder, the K data strings each containing M pieces of data after the phase shift; and
   a second phase multiplier for performing a phase shift of delaying a phase of each of the sum of the K pieces of data by $2\pi$ (m - 1)s/(K × M) when the sum of the K pieces of data, which are m-th data, is calculated by the adder and outputting each of the sum after the phase shift to the transformer.

3. A Fourier transform device comprising:

   a first phase multiplier for performing, among K × M pieces of data ("K" is an integer greater than or equal to 3, and "M" is an integer greater than or equal to 2), a phase shift of advancing a phase of each of g-th data (g = 1, M + 1, 2M + 1,...., M × (K - 1) + 1) to (g + M - 1)th data by $2\pi$ (g - 1)s/K ("s" is an integer between zero and (K - 1)) in order each starting from g-th data and outputting the K × M pieces of data after the phase shift;
   an accumulator for calculating each sum of K pieces of data at every M pieces of data in order starting from m-th data (m = 1,..., M) when counted from each of first data to M-th data in order starting from first data among the K × M pieces of data after the phase shift that have been output from the first phase multiplier;
   a second phase multiplier for performing a phase shift of delaying a phase of a sum of the K pieces of data by $2\pi$ (m - 1)s/(K × M) when the sum of the K pieces of data containing data starting from m-th data is calculated by the accumulator and outputting each of the sum after the phase shift; and
   a transformer for performing an M-point Fourier transform on each of the sum calculated by the second phase multiplier or an M-point inverse Fourier transform on each of the sum.

4. A Fourier transform device, wherein, among K × M pieces of data ("K" is an integer greater than or equal to 2, and "M" is an integer greater than or equal to 3), ((k - 1)M + 1)th data (k = 1,..., K) in order starting from first data is head data in each of K data strings, and the K data strings each contain M pieces of data each at every M pieces of data in order starting from each head data among the K × M pieces of data, the Fourier transform device comprising:

a transformer for performing a K-point Fourier transform on K pieces of data that are m-th data (m = 1,..., M) in order starting from respective head data in the respective M pieces of data contained in the K data strings or a K-point inverse Fourier transform on the K pieces of data;

a first phase multiplier for performing a phase shift of delaying, by $2\pi (m - 1) \times (k - 1)/(K \times M)$, a phase of each of a k-th transform result (k = 1,..., K) in an m-th times of Fourier transform (m = 1,..., M) by the transformer or a phase of each of a k-th transform result in an m-th times of inverse Fourier transform by the transformer and outputting K× M transform results after the phase shift; and

an accumulator for using, as a head transform result, each of M transform results from first to M-th transform results in order starting from a first transform result among the K × M transform results after the phase shift that have been output from the first phase multiplier and calculating each sum of K transform results at every M transform results in order starting from each head transform result.

5. The Fourier transform device according to claim 4, further comprising:
a second phase multiplier for modifying each of phases of the K × M transform results after the phase shift output from a first phase multiplier depending on a sum of the K transform results to be calculated by the accumulator and outputting the K × M transform results after the phase modification to the accumulator.

6. A Fourier transform device, wherein K × M pieces of data ("K" is an integer greater than or equal to 2, and "M" is an integer greater than or equal to 3) are arranged in order of ((k - 1)M + m ((k = 1, m = 1), (k = 2, m = 1),..., (k = K, m = 1), (k = 1, m = 2), (k = 2, m = 2),..., (k = K, m = 2),..., (k = 1, m = M), (k = 2, m = M),..., (k = K, m = M)), the Fourier transform device comprising:

a transformer for performing a K-point Fourier transform on K pieces of data in order from head data in the K × M pieces of data or a K-point inverse Fourier transform on the K pieces of data;

a first phase multiplier for performing a phase shift of delaying, by $2\pi (m - 1) \times (k - 1)/(K \times M)$, a phase of each of a k-th transform result (k = 1,..., K) in an m-th times of Fourier transform (m = 1,..., M) by the transformer or a phase of each of a k-th transform result in an m-th times of inverse Fourier transform by the transformer and outputting K× M transform results after the phase shift; and

an accumulator for using, as a head transform result, each of M transform results from first to M-th transform results in order starting from a first transform result among the K × M transform results after the phase shift that have been output from the first phase multiplier and calculating each sum of K transform results at every M transform results in order starting from each head transform result.

7. The Fourier transform device according to claim 6, further comprising:
a second phase multiplier for modifying each of phases of the K × M transform results after the phase shift output from the first phase multiplier depending on a sum of the K transform results to be calculated by the accumulator and outputting the K × M transform results after the phase modification to the accumulator.

8. A Fourier transform method, wherein, among K × M pieces of data ("K" is an integer greater than or equal to 3, and "M" is an integer greater than or equal to 2), ((k - 1)M + 1)th data (k = 1,..., K) in order starting from first data is head data in each of K data strings, and the K data strings each contain M pieces of data each at every M pieces of data in order starting from each head data among the K × M pieces of data, the Fourier transform method comprising:

by an adder, calculating each sum of K pieces of data that are m-th data (m = 1,..., M) in the order starting from each of the head data in the respective M pieces of data contained in the K data strings; and

by a transformer, performing an M-point Fourier transform on the sums calculated by the adder or an M-point inverse Fourier transform on the sums.

## FIG. 1

Fourier Transform Device

$1_1$
$1_2$
$1_3$
$1_K$

Adder — $\Sigma_m$ → Transformer

2

3

4

## FIG. 2

11
Addition
Circuit

12
Transform
Circuit

## FIG. 3

21
Memory

22
Processor

# FIG. 4

```
                    ┌─────────┐
                    │  Start  │
                    └────┬────┘
                         │
                         ▼
         ┌──────────────────────────────┐
         │   Adder Calculates Sum of     │
         │      K Pieces of Data         │ ~ST1
         └──────────────┬───────────────┘
                         │
                         ▼
         ┌──────────────────────────────┐
         │ Transformer Performs M-point   │
         │ Fourier Transform on M Sums    │ ~ST2
         │  or M-Point Inverse Fourier    │
         │    Transform on M Sums         │
         └──────────────┬───────────────┘
                         │
                         ▼
                    ┌─────────┐
                    │   End   │
                    └─────────┘
```

# FIG. 5

**Fourier Transform Device**

$1_1$
$1_2$
$1_3$
$1_K$

| First Phase Multiplier (5) | → | Adder (2) | $\Sigma_m$ → | Second Phase Multiplier (6) | $\Sigma'_m$ → | Transformer (3) | → 4 |

# FIG. 6

| Addition Circuit (11) | | Transform Circuit (12) |
| Phase Multiplication Circuit (13) | | Phase Multiplication Circuit (14) |

## FIG. 7

Fourier Transform Device

30

First Phase Multiplier 31 → Accumulator 32 → $\Sigma_m$ Second Phase Multiplier 6 → $\Sigma'_m$ Transformer 3 → 4

## FIG. 8

Phase Multiplication Circuit 41

Accumulation Circuit 42

Phase Multiplication Circuit 14

Transform Circuit 12

## FIG. 9

Fourier Transform Device

$1_1$
$1_2$
$1_3$
$1_K$

Transformer 51 → First Phase Multiplier 52 → Accumulator 53 → 4

## FIG. 10

Transform Circuit 61

Phase Multiplication Circuit 62

Accumulation Circuit 63

## FIG. 11

Fourier Transform Device

50 → Transformer (51) → First Phase Multiplier (52) → Accumulator (53) → 4

## FIG. 12

Fourier Transform Device

30 → Matrix Transpose Buffer (54) → 50 → Transformer (51) → First Phase Multiplier (52) → Accumulator (53) → 4

## FIG. 13

Fourier Transform Device

50 → Transformer (51) → First Phase Multiplier (52) → Second Phase Multiplier (55) → Accumulator (53) → 4

## FIG. 14

Transform Circuit (61)

Phase Multiplication Circuit (62)

Accumulation Circuit (63)

Phase Multiplication Circuit (64)

## INTERNATIONAL SEARCH REPORT

International application No.

PCT/JP2019/002271

### A. CLASSIFICATION OF SUBJECT MATTER
Int. Cl. G06F17/14(2006.01)i

According to International Patent Classification (IPC) or to both national classification and IPC

### B. FIELDS SEARCHED

Minimum documentation searched (classification system followed by classification symbols)
Int. Cl. G06F17/14

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2002-117016 A (SONY CORP.) 19 April 2002, entire text, all drawings & US 2002/0035588 A1 | 1-8 |
| A | JP 2003-115813 A (HITACHI KOKUSAI ELECTRIC INC.) 18 April 2003, entire text, all drawings (Family: none) | 1-8 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19.04.2019 | Date of mailing of the international search report<br>07.05.2019 |
|---|---|
| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003115813 A